# DEMANDE DE BREVET EUROPEEN

(11) **EP 4 751 952 A1**
(43) Date de publication de la demande: **03.06.2026**
(21) Numéro de dépôt: 25219337.0
(22) Date de dépôt: 28.11.2025
(51) Int. Cl.: B60J 10/32, B60R 13/04, B60J 10/78, B60J 10/86

(54) **SYSTÈME DE RÉTENTION D'UN PROFILÉ EXTRUDÉ D'UNE COULISSE DE PORTE ARRIÈRE D'UN VÉHICULE AUTOMOBILE**

(30) Priorité: 29.11.2024 FR 2413192
(71) Demandeur: Renault s.a.s, 92100 Boulogne Billancourt (FR)
(72) Inventeur: MIREA, Adrian, 062203 BUCAREST (RO)

(57) **Abrégé**

L'invention concerne un système (1) de rétention d'un profilé (2) extrudé d'une coulisse (3) de porte (13) arrière d'un véhicule (20) automobile, dans lequel :
- le profilé (2) extrudé présente une nervure (5) longitudinale de solidarisation du profilé (2) extrudé et d'un enjoliveur, dit enjoliveur (6) pied C,
- ledit enjoliveur (6) pied C présentant un repliement (12) latéral formant une gorge (7) de forme en U selon toute section droite transversale dudit enjoliveur (6) pied C, la nervure (5) longitudinale formant au moins une lèvre (8) souple s'étendant continument sur la longueur de la nervure (5) longitudinale,

la nervure (5) longitudinale étant adaptée pour pouvoir s'étendre dans la gorge (7) dudit enjoliveur (6) pied C,
caractérisé en ce que la gorge (7) en U dudit enjoliveur (6) pied C présente une pluralité de protubérances (14) s'étendant chacune dans la gorge (7) en U à partir d'une face (9) interne d'une paroi (15) formant la gorge (7) en U, chaque protubérance (14) étant adaptée pour pouvoir coopérer chacune avec un tronçon (10) de lèvre (8) souple de la nervure (5) longitudinale engagée dans la gorge (7) en U et pour pouvoir retenir le profilé (2) extrudé solidaire dudit enjoliveur (6) pied C sur toute la longueur du profilé (2) extrudé.

## Description

### [Domaine technique]

L'invention concerne un système de rétention et/ou de maintien d'un profilé extrudé d'une coulisse de porte arrière, notamment de porte arrière mixte, d'un véhicule automobile.

### [État de la technique antérieure]

On connaît de FR3102714, un agencement d'un contour de vitre d'une porte latérale d'un véhicule automobile, généralement dénommé « joint de vitre ». L'agencement de FR3102714 comprend un moyen de maintien en position d'un enjoliveur implanté au niveau du contour de vitre et fixé par clippage le long d'un profilé extrudé. Le profilé extrudé de FR3102714 présente des éléments de surmoulage agencés de façon à maintenir le profilé extrudé sur une caisse du véhicule.

Le profilé extrudé munis d'éléments de surmoulage de FR3102714 pose problème. Il nécessite pour sa fabrication une étape spécifique de surmoulage des éléments de surmoulage sur le profilé extrudé. Cette étape spécifique de surmoulage est complexe dans sa mise en œuvre. Elle impose un surcoût économique.

L'invention vise à pallier cet inconvénient.

L'invention vise donc à proposer un système de rétention d'un profilé extrudé d'une coulisse de porte arrière de véhicule, dans lequel le profilé extrudé est obtenu par un procédé exempt de toute étape de surmoulage d'un élément de surmoulage sur le profilé extrudé.

L'invention vise aussi à proposer un tel système de rétention d'un profilé extrudé dans lequel le profilé extrudé est exempt de tout moyen de fixation positive apte à assurer une fixation de l'extrémité longitudinale du profilé extrudé.

### [Exposé de l'invention]

L'invention vise un système sans fixation positive, de rétention -notamment de maintien- d'un profilé extrudé d'une coulisse de porte arrière d'un véhicule automobile.

L'invention vise un système de rétention d'un profilé extrudé d'une coulisse de porte arrière d'un véhicule automobile, le profilé extrudé, dans lequel :
- le profilé extrudé présente une nervure longitudinale de solidarisation du profilé extrudé et d'un enjoliveur, dit enjoliveur pied C,
- ledit enjoliveur pied C présente un repliement latéral formant une gorge de forme en U selon toute section droite transversale dudit enjoliveur pied C,
- la nervure longitudinale forme au moins une lèvre souple s'étendant continument sur la longueur -notamment sur toute la longueur- de la nervure longitudinale,
- la nervure longitudinale étant adaptée pour pouvoir s'étendre dans la gorge dudit enjoliveur pied C,
caractérisé en ce que la gorge en U dudit enjoliveur pied C présente une pluralité de protubérances s'étendant chacune dans la gorge en U à partir d'une face interne d'une paroi formant la gorge en U, chaque protubérance étant adaptée pour pouvoir coopérer chacune avec un tronçon de lèvre souple de la nervure longitudinale engagée dans la gorge en U et pour pouvoir retenir le profilé extrudé solidaire dudit enjoliveur pied C sur toute la longueur du profilé extrudé.

L'invention vise donc un type de conception, d'assemblage et de rétention du profilé extrudé sur ledit dudit enjoliveur pied C de la coulisse arrière d'un véhicule automobile.

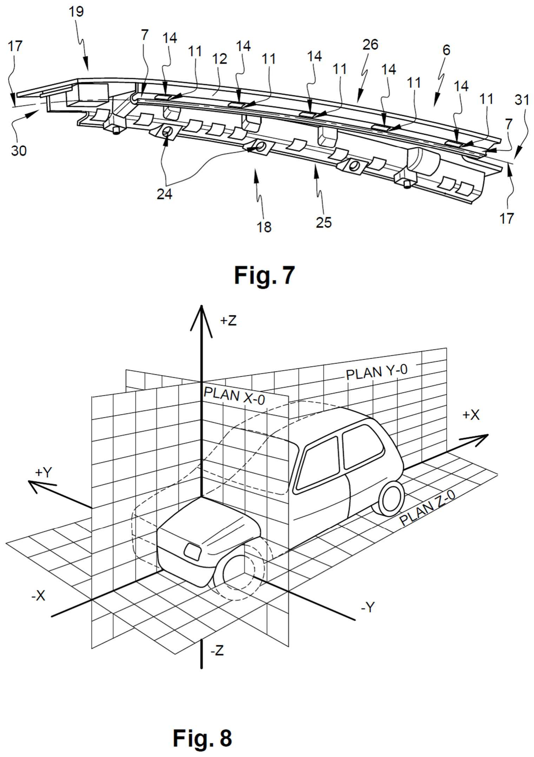

Dans tout le texte :
- le terme « sensiblement » et l'expression « au mains sensiblement » indiquent, de façon habituelle, qu'une caractéristique, structurelle ou fonctionnelle, ne doit pas être prise comme marquant une discontinuité abrupte, qui n'aurait pas de sens physique, mais couvre non seulement cette structure ou cette fonction, mais également des variations légères de cette structure ou de cette fonction qui produisent, dans le contexte technique considéré, un effet de même nature, sinon de même degré,
- le repère XYZ renvoie à un repère orthonormé direct XYZ classiquement utilisé en conception automobile, dans lequel l'axe X désigne la direction longitudinale avant-arrière du véhicule, orienté vers l'arrière, l'axe Y désigne la direction transversale et est orienté vers la droite du véhicule, l'axe Z désigne la direction verticale, et est orienté vers le haut. Un tel repère orthonormé direct XYZ tel que représenté en Figure 8 répond à la norme standard n°0100112,

- les termes « avant », « arrière », « droit(e) »,« gauche », « haut » et « bas » sont à considérer par rapport à un véhicule automobile en état normal de progresser en « marche avant », et
- les termes « pied » ou « montant » désignent, dans le domaine automobile, des éléments rigides sensiblement verticaux qui participent au maintien de la structure du véhicule automobile. Les expressions « pied avant » ou « montant avant » ou « pied A » désignent le montant ou pilier sensiblement vertical situé entre le pare-brise et la porte avant droite ou gauche du véhicule. Les expressions « pied milieu » ou « montant central » ou « pied B » désignent le montant ou pilier sensiblement vertical situé entre les portes avant et arrière (droite ou gauche) du véhicule. Les expressions « pied arrière » ou « pied C » désignent l'élément rigide sensiblement vertical situé à l'arrière de la porte arrière (droite ou gauche) du véhicule.

Le profilé extrudé est formé par extrusion, notamment par extrusion à chaud, en continu d'un matériau compressé et contraint à traverser une filière présentant une section de forme prédéterminée. Avantageusement, le profilé extrudé est formé par extrusion -notamment thermoformé par extrusion- en grande longueur, puis découpé pour obtenir la longueur de profilé extrudé désirée.

Selon l'invention, le système de rétention du profilé extrudé sur ledit enjoliveur pied C ne nécessite aucune étape d'aménagement du profilé extrudé ultérieurement à son extrusion, autre qu'une étape de découpe du profilé extrudé aux dimensions, notamment à la longueur, requise(s). La production des éléments nécessaires au montage de la coulisse de pied C en est donc simplifiée.

Selon l'invention, le profilé extrudé est souple en flexion longitudinale. Il peut prendre toute forme requise par la forme dudit enjoliveur pied C et/ou par la forme de la gorge en U dudit enjoliveur pied C. Le profilé extrudé est élastique en compression transversale par rapport à l'axe d'allongement du profilé extrudé. Également, la nervure longitudinale du profilé extrudé est élastique en compression transversale par rapport à l'axe d'allongement du profilé extrudé. En outre, les lèvres souples du profilé extrudé sont élastiques en compression transversale par rapport à l'axe d'allongement du profilé extrudé.

Selon l'invention, les lèvres souples et élastiques en compression transversale sont ramenées élastiquement en appui sur chacune des protubérances formées sur la face interne de la gorge en U lorsque la nervure longitudinale du profilé extrudé est engagée dans la gorge en U dudit enjoliveur de pied. L'alignement et la répartition régulière des protubérances sur la face interne de la gorge en U permet une solidarisation optimale dudit enjoliveur pied C et du profilé extrudé, sans nécessiter la mise en œuvre d'au moins un organe spécifiquement surajouté, de fixation positive tel qu'un organe de fixation surmoulé sur le profilé extrudé ou un organe surajouté de fixation par clipsage.

Selon certains modes de réalisation, le repliement latéral formant la gorge en U dudit enjoliveur pied C s'étend sur au moins une partie de -en particulier sur sensiblement toute la- longueur dudit enjoliveur pied C.

Selon certains modes de réalisation, le profilé extrudé est exempt de tout organe de fixation du profilé extrudé, surmoulé par injection sur le profilé extrudé.

Selon certains modes de réalisation, le profilé extrudé est exempt de tout organe de fixation surmoulé par injection à l'une des extrémités longitudinales du profilé extrudé.

Selon certains modes de réalisation, le profilé extrudé est exempt de tout organe de fixation du profilé extrudé par clipsage, rapporté sur le profilé extrudé ultérieurement à une extrusion du profilé extrudé. Dans tout le texte, on tend par clipsage, un assemblage par déformation élastique.

Selon certains modes de réalisation, le profilé extrudé est exempt de tout organe de fixation du profilé extrudé par clipsage, s'étendant à l'une des extrémités longitudinales du profilé extrudé.

Selon certains modes de réalisation, le profilé extrudé est en au moins un matériau choisi dans le groupe formé des polymères élastomères thermoplastiques (TPE), des caoutchoucs synthétiques tels que par exemple les éthylène-propylène-diène monomères (EPDM), des polymères thermoplastiques vulcanisés (TPV) et des polychlorures de vinyle (PVC). Avantageusement, le profilé extrudé est en au moins un matériau polymère thermoplastique.

Avantageusement, au moins un polymère élastomère thermoplastique (TPE) combine les propriétés élastiques des élastomères et des propriétés thermoplastiques de transition liquide/solide sous l'effet d'une variation de température. Selon certains modes de réalisation, au moins un polymère élastomère thermoplastique (TPE) est choisi dans le groupe formé des copolymères. Selon certains modes de réalisation, au moins un polymère élastomère thermoplastique (TPE) est choisi dans le groupe formé des copolymères à blocs, tels que le TPE-S (PP/SEBS) et le TPE-V (PP/EPDM vulcanisé). Selon certains modes de réalisation, au moins un polymère élastomère thermoplastique (TPE) est choisi dans le groupe formé des mélanges mécaniques d'au moins deux polymères, dont au moins un polymère thermoplastique et au moins un élastomère.

Selon certains modes de réalisation, le profilé extrudé est monobloc. Selon ces modes de réalisation avantageux, le profilé extrudé est formé d'un seul tenant.

Selon certains modes de réalisation, chaque protubérance s'étend à partir de la face interne de la paroi formant la gorge en U et dans une direction sensiblement orthogonale à ladite face interne. Chaque protubérance forme une butée sur laquelle la lèvre souple du profilé extrudé prend appui lorsque la nervure longitudinale du profilé extrudé est positionnée dans la gorge en U dudit enjoliveur pied C. Avantageusement, ledit appui s'oppose à la désolidarisation du profilé extrudé et dudit enjoliveur pied C.

Selon certains modes de réalisation, la face interne de la gorge en U dudit enjoliveur pied C présente une pluralité d'évidements traversant la paroi, chaque évidemment de la pluralité d'évidements s'étendant radialement entre une protubérance de la pluralité de protubérances et un fond de la gorge en U, de façon à pouvoir recevoir le tronçon de lèvre souple de la nervure longitudinale engagée dans la gorge en U, le tronçon de lèvre souple étant rappelé élastiquement dans l'évidement, et pour pouvoir coopérer avec la protubérance et retenir le profilé extrudé solidaire dudit enjoliveur pied C.

Selon certains modes de réalisation, la porte arrière est une porte mixte formée d'un caisson intérieur de porte, d'un panneau extérieur de porte et d'un cadre rapporté sur le caisson de porte.

L'invention s'étend également à un enjoliveur, dit enjoliveur pied C, présentant un repliement formant une gorge s'étendant sur au moins une partie de longueur dudit enjoliveur pied C et de forme en U en section droite transversale dudit enjoliveur pied C,
la gorge dudit enjoliveur pied C étant adaptée pour pouvoir recevoir une nervure longitudinale d'un profilé extrudé d'un système de rétention selon l'invention, la gorge dudit enjoliveur présentant une pluralité de protubérances alignées selon un axe d'allongement de la gorge en U, chaque protubérance s'étendant à partir d'une face interne d'une paroi formant la gorge en U et étant adaptée pour pouvoir coopérer chacune avec la nervure longitudinale engagée dans la gorge en U et pour pouvoir retenir le profilé extrudé solidaire de l'enjoliveur sur toute la longueur du profilé extrudé.

Selon certains modes de réalisation, la face interne de la gorge en U dudit enjoliveur pied C présente une pluralité d'évidements traversant la paroi, chaque évidemment de la pluralité d'évidements s'étendant radialement entre une protubérance de la pluralité de protubérances et un fond de la gorge en U, de façon à pouvoir recevoir le tronçon de lèvre souple de la nervure longitudinale engagée dans la gorge en U, le tronçon de lèvre souple étant rappelé élastiquement dans l'évidement, et pour pouvoir coopérer avec la protubérance et retenir le profilé extrudé solidaire dudit enjoliveur pied C.

L'invention s'étend également à un véhicule automobile comprenant un système selon l'invention, de rétention d'un profilé extrudé d'une coulisse de porte arrière.

L'invention s'étend également à un véhicule automobile comprenant un enjoliveur, dit enjoliveur pied C, selon l'invention.

### [Description des dessins]

D'autres caractéristiques et avantages de l'invention apparaîtront encore à la lecture de la description qui va suivre. Celle-ci est purement illustrative et doit être lue en regard des dessins annexés sur lesquels :
[Fig. 1] la figure 1 est une vue à plat d'un détail de porte arrière munie d'un système de rétention selon l'invention,
[Fig. 2] la figure 2 est une vue en coupe d'un profilé extrudé coopérant avec une gorge en U d'un enjoliveur, dit enjoliveur pied C selon l'invention,
[Fig. 3] la figure 3 est une vue en perspective d'un tronçon du repliement latéral dudit enjoliveur pied C,
[Fig. 4] la figure 4 est une coupe d'une vue en perspective d'un tronçon de repliement latéral dudit enjoliveur pied C et d'un profilé extrudé coopérant avec une gorge en U formée par ledit repliement latéral,
[Fig. 5] la figure 5 est une coupe d'une vue en perspective d'un tronçon de repliement latéral dudit enjoliveur pied C et d'un profilé extrudé coopérant avec une gorge en U formée par ledit repliement latéral, la coupe passant par plan sécant à une protubérance et à un évidement de la gorge en U,
[Fig. 6] la figure 6 est une coupe d'une vue en perspective d'un tronçon de repliement latéral dudit enjoliveur pied C et d'un profilé extrudé coopérant avec une gorge en U formée par ledit repliement latéral, la coupe passant par plan sécant à une protubérance et à un évidement de la gorge en U,
[Fig. 7] la figure 7 est une vue en perspective d'un enjoliveur, dit enjoliveur pied C, selon une face principale intérieure opposée à la face principale d'enjolivement, et
[Fig. 8] la figure 8 est une représentation schématique d'un repère XYZ orthonormé direct classiquement utilisé en conception automobile.

### [Description des modes de réalisation]

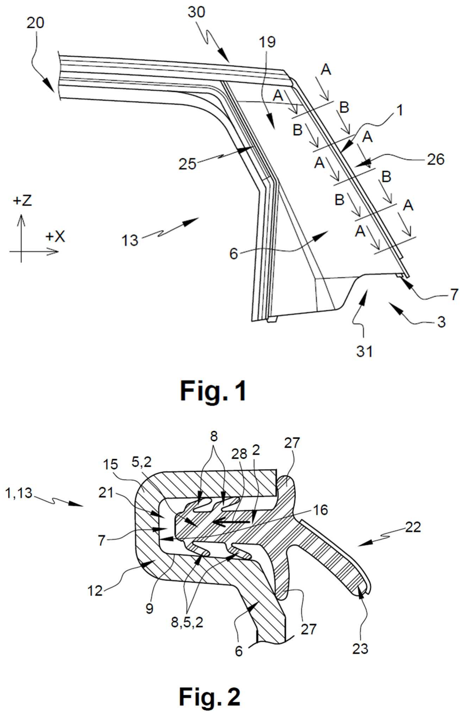

Le détail d'une coulisse 3 d'une porte 13 arrière gauche d'un véhicule 20 automobile de la figure 1 présente un enjoliveur, dit enjoliveur 6 pied C, s'étendant à l'avant (selon la direction -X de l'axe X du repère XYZ orthonormé direct tel que représenté en figure 8) d'un côté de caisse gauche (non représenté) du véhicule 20 et dans le prolongement du côté de caisse. Ledit enjoliveur 6 pied C présente une face principale 19 d'enjolivement du véhicule et apparente à la vue du public. Ledit enjoliveur 6 pied C présente une extrémité 30 longitudinale haute (selon l'axe +Z du repère XYZ) et une extrémité 31 longitudinale basse (selon l'axe -Z du repère XYZ). Ledit enjoliveur 6 pied C s'étend dans un plan sensiblement orthogonal à l'axe Y du repère orthonormé direct XYZ. Ledit enjoliveur 6 pied C présente une bordure 25 avant s'étendant en regard d'une vitre de la portière 13 arrière gauche et une bordure 26 arrière orientée vers le côté de caisse gauche. Ledit enjoliveur 6 pied C peut être formé de tout matériau adapté. Il peut, par exemple, être formé d'au moins un matériau métallique, d'au moins un matériau polymère ou d'au moins un matériau composite. Ledit enjoliveur 6 pied C, notamment la face principale 19 d'enjolivement dudit enjoliveur 6 pied C peut présenter un aspect coloré et/ou un aspect chromé ou non. La bordure 26 arrière dudit enjoliveur 6 pied C forme une gorge 7 en U s'étendant parallèlement à l'axe d'allongement dudit enjoliveur 6 pied C. La gorge 7 en U et la bordure 26 arrière coopèrent avec un profilé extrudé (non visible en figure 1) pour assurer l'étanchéité de la portière 13 arrière rabattue sur le côté de caisse en position de fermeture du véhicule 20 automobile. Le profilé extrudé est exempt de tout moyen de solidarisation avec ledit enjoliveur 6 pied C par fixation positive, c'est-à-dire que le profilé extrudé est exempt de tout organe de fixation surmoulé par injection à l'une des extrémités longitudinales du profilé extrudé et de tout organe de fixation du profilé extrudé par clipsage, rapporté sur le profilé extrudé ultérieurement à une extrusion du profilé extrudé.

La figure 2 est une vue en section transversale selon un plan de coupe A-A de la figure 1, du profilé 2 extrudé coopérant avec une gorge 7 en U d'un repliement 12 latéral dudit enjoliveur 6 pied C. Le profilé 2 extrudé présente une première face 21 principale adaptée pour coopérer avec la gorge 7 en U dudit enjoliveur 6 pied C et une deuxième face 22 principale, opposée à la première face 21 principale et adaptée pour coopérer avec le côté de caisse du véhicule 20. Le profilé 2 extrudé forme une nervure 5 longitudinale sur la première face 21 principale, la nervure 5 longitudinale étant adaptée et dimensionnée pour pouvoir être introduite dans la gorge 7 en U. Dans le mode de réalisation représenté, la nervure 5 longitudinale présente 4 lèvres 8 souples destinées à pouvoir être rabattues en direction de la nervure 5 longitudinale lors de l'introduction 28 de la nervure 5 longitudinale du profilé 2 extrudé dans la gorge 7 en U dudit enjoliveur 6 pied C. Les lèvres 8 souples coopèrent en friction avec la face 9 interne de la gorge 7 en U et participent de ce fait à la rétention du profilé 2 extrudé solidaire dudit enjoliveur 6 pied C. Le profilé 2 extrudé présente deux appuis 27 longitudinaux coopérant chacun avec le repliement 12 de façon à obturer la gorge 7 en U lorsque le profilé 2 extrudé est retenu solidaire dudit enjoliveur 6 pied C. L'accumulation de salissures dans la gorge en U est ainsi limitée, voir empêchée. La deuxième face 22 principale du profilé 2 extrudé présente une languette 23 élastique en écrasement lors de la fermeture de la porte 13 arrière du véhicule 20 automobile et le rabattement de la porte 13 arrière sur le côté de caisse, la languette 23 formant un joint d'étanchéité entre la porte arrière et le côté de caisse.

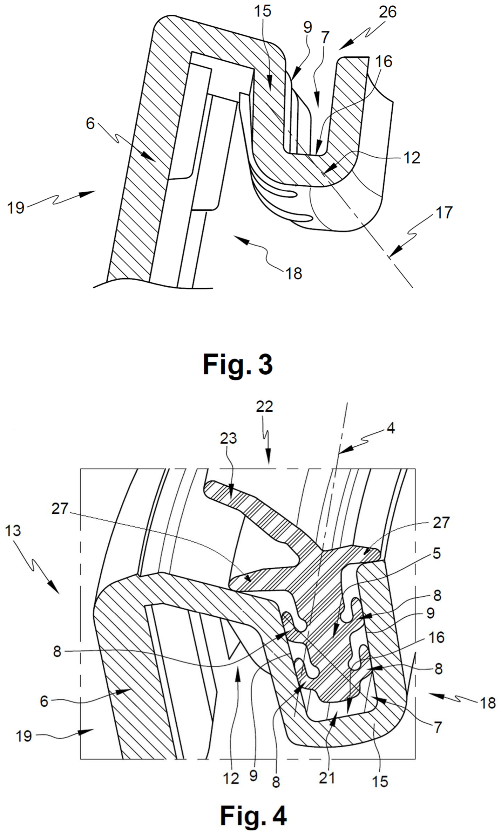

Une section transversale selon le plan de coupe A-A de la figure 1, d'un tronçon du repliement 12 latéral formant la bordure 26 arrière dudit enjoliveur 6 pied C est représenté en figure 3. En figure 3, le profilé extrudé n'est pas représenté. Le repliement 12 dudit enjoliveur 6 pied C forme une gorge 7 en U s'étendant en regard de la face 18 interne dudit enjoliveur 6 pied C, la gorge 7 en U débouchant en bordure 26 arrière dudit enjoliveur 6 pied C. La gorge 7 en U s'étend selon une direction 17 d'allongement de la gorge 7 en U et dudit enjoliveur 6 pied C. Dans le plan de section de la figure 3, la gorge 7 en U présente une face 9 interne sensiblement lisse et dépourvue de protubérance.

Une section transversale selon un plan de coupe A-A de la figure 1, d'un tronçon du repliement 12 latéral formant la bordure 26 arrière dudit enjoliveur 6 pied C est représenté en figure 4. En figure 4, la gorge 7 en U coopère avec le profilé 2 extrudé d'axe 4 d'allongement, la nervure 5 longitudinale du profilé 2 extrudé s'étendant dans la gorge 7 en U dudit enjoliveur 6 pied C. Les appuis 27 longitudinaux du profilé 2 extrudé coopèrent avec le repliement 12 de façon à obturer la gorge 7 en U, le profilé 2 extrudé étant retenu solidaire dudit enjoliveur 6 pied C du fait des lèvres 8 souples coopérant par friction avec la face 9 interne de la gorge 7 en U. La languette 23 élastique du profilé 2 extrudé émergeant de la deuxième face 22 principale du profilé 2 extrudé est élastique en déformation par écrasement lors de la fermeture de la porte 13 arrière du véhicule 20 automobile et par rabattement de la porte 13 arrière sur le côté de caisse. La languette 23 élastique écrasée sur le côté de caisse forme un joint d'étanchéité entre la porte 13 arrière et le côté de caisse. Dans le mode de réalisation représenté, chaque lèvre 8 souple est ramené élastiquement en une position de friction sur la face 9 interne de la gorge 7 en U.

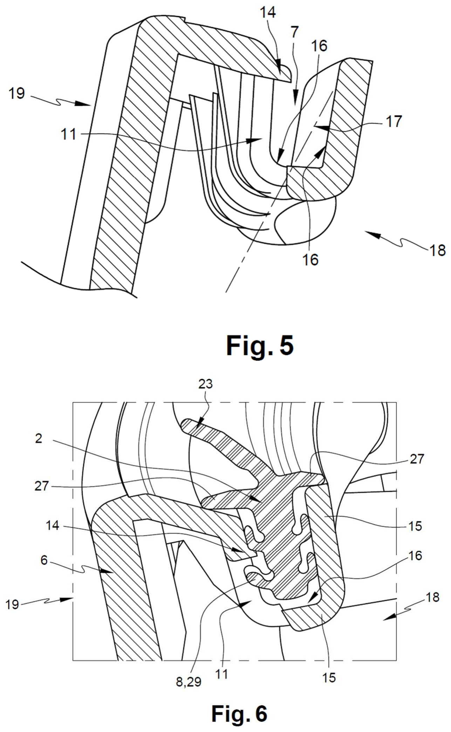

Une section transversale selon le plan de coupe B-B de la figure 1, d'un tronçon du repliement 12 latéral formant la bordure 26 arrière dudit enjoliveur 6 pied C est représenté en figure 5. En figure 5, le profilé extrudé n'est pas représenté. Le repliement 12 dudit enjoliveur 6 pied C forme une gorge 7 en U s'étendant en regard de la face 18 interne dudit enjoliveur 6 pied C, la gorge 7 en U débouchant en bordure 26 arrière dudit enjoliveur 6 pied C. Dans le plan de section de la figure 5, la gorge 7 en U présente une face 9 interne présentant une protubérance 14 s'étendant à partir de la face 9 interne de la gorge 7 en U et dans une direction sensiblement orthogonale à la partie de face 9 interne de laquelle émerge la protubérance 14. Dans le plan de section de la figure 5, la gorge 7 en U présente une face 9 interne présentant un évidement 11 traversant la paroi 15 de la gorge 7 en U. L'évidemment 11 s'étend transversalement entre la protubérance 14 et le fond 16 de la gorge 7 en U. Rien n'empêche cependant de prévoir qu'au moins un, notamment chaque évidement 11 soit non traversant de la paroi 15 de la gorge 7 en U et forme un renfoncement dans la paroi 15 de la gorge 7 en U.

Une section transversale selon un plan de coupe B-B de la figure 1, d'un tronçon du repliement 12 latéral formant la bordure 26 arrière dudit enjoliveur 6 pied C est représenté en figure 6. En figure 6, la gorge 7 en U coopère avec le profilé 2 extrudé, la nervure 5 longitudinale du profilé 2 extrudé s'étendant dans la gorge 7 en U dudit enjoliveur 6 pied C. Les appuis 27 longitudinaux du profilé 2 extrudé coopèrent avec le repliement 12 de façon à obturer la gorge 7 en U, le profilé 2 extrudé étant retenu solidaire dudit enjoliveur 6 pied C. La languette 23 élastique du profilé 2 extrudé émergeant de la deuxième face 22 principale du profilé 2 extrudé est élastique en déformation par écrasement lors de la fermeture de la porte 13 arrière du véhicule 20 automobile et par rabattement de la porte 13 arrière sur le côté de caisse. La languette 23 élastique écrasée sur le côté de caisse forme un joint d'étanchéité entre la porte 13 arrière et le côté de caisse. Dans le mode de réalisation représenté, une portion 29 de lèvre 8 souple s'étendant vis-à-vis de l'évidement 11 est ramené en une position étendue dans l'évidement 11, c'est à dire non rabattue sur le profilé 2 extrudé et au contact de la face 9 interne de la gorge 7 en U, du fait de l'évidement 11. La portion 29 de lèvre 8 souple est ramenée élastiquement dans l'évidement 11 en position de butée sur la protubérance 14 superposée à l'évidement 11. La butée de la portion 29 de lèvre 8 souple sur la protubérance 14 participe à la rétention du profilé 2 extrudé de façon qu'il reste solidaire dudit enjoliveur 6 pied C.

Un enjoliveur, dit enjoliveur 6 pied C, d'une porte arrière droite d'un véhicule 20 automobile est représenté en figure 7. Ledit enjoliveur 6 pied C peut être formé par tout moyen approprié, par exemple par moulage par injection. Ledit enjoliveur 6 pied C s'étend entre une extrémité 30 longitudinale haute (représentée à gauche en figure 7) et une extrémité 31 longitudinale basse (représentée à droite en figure 7). Ledit enjoliveur 6 pied C présente une face 18 interne destinée à s'étendre en regard d'un côté de caisse lorsque la porte 13 arrière est close et une face 19 d'enjolivement, opposée à ladite face 18 interne. Ledit enjoliveur 6 pied C présente une bordure 25 avant s'étendant dans la direction -X du repère XYZ orthonormé direct et une bordure 26 arrière s'étendant dans la direction +X lorsque ledit enjoliveur 6 pied C est monté sur le véhicule automobile. La bordure 25 avant est munie de percements 24 de fixation dudit enjoliveur 6 pied C sur la porte 13 arrière. La bordure 26 arrière dudit enjoliveur 6 pied C présente un repliement 12 latéral formant la gorge 7 en U adaptée pour pouvoir recevoir le profilé 2 extrudé. Dans le mode de réalisation représenté, la paroi 15 de la gorge 7 en U présente une pluralité de protubérances 14 s'étendant chacune à partir de la face 9 interne de la gorge 7 en U et vers l'intérieur de la gorge 7 en U. Les protubérances 14 de la pluralité de protubérances 14 sont de préférence alignées selon la direction 17 d'allongement dudit enjoliveur 6 pied C et de la gorge 7 en U. Avantageusement, une protubérance 14 de la pluralité de protubérances 14 est disposée à proximité de chacune des extrémités longitudinales de la gorge 7 en U de façon à retenir le profilé 2 extrudé sur toute sa longueur, sans nécessiter de moyen de fixation positive des extrémités longitudinales du profilé 2 extrudé sur ledit enjoliveur 6 pied C. Dans le mode de réalisation représenté, la paroi 15 de la gorge 7 en U présente une pluralité d'évidements 11 traversant la paroi 15, chaque évidement 11 étant interposé entre une protubérance 14 et le fond 16 de la gorge 7 en U. Les évidements 11 sont également de préférence alignés selon la direction 17 d'allongement dudit enjoliveur 6 pied C et de la gorge 7 en U de façon à permettre une coopération de chaque protubérance 14 avec une portion 29 de lèvre 8 souple du profilé 2 extrudé coopérant avec ledit enjoliveur 6 pied C.

L'invention concerne également un système de rétention d'un profilé extrudé d'une coulisse de porte arrière d'un véhicule automobile sur un enjoliveur, dit enjoliveur pied C, un tel enjoliveur et un véhicule muni d'un tel système caractérisés, en combinaison ou non, par tout ou partie des caractéristiques mentionnées ci-dessus ou ci-après. Quelle que soit la présentation formelle qui en est donnée, sauf indication contraire explicite, les différentes caractéristiques mentionnées ci-dessus ou ci-après ne doivent pas être considérées comme étroitement ou inextricablement liées entre elles, l'invention pouvant concerner l'une seulement de ces caractéristiques structurelles ou fonctionnelles, ou une partie seulement de ces caractéristiques structurelles ou fonctionnelles, ou une partie seulement de l'une de ces caractéristiques structurelles ou fonctionnelles, ou encore tout groupement, combinaison ou juxtaposition de tout ou partie de ces caractéristiques structurelles ou fonctionnelles.

## Revendications

1. Système (1) de rétention d'un profilé (2) extrudé d'une coulisse (3) de porte (13) arrière d'un véhicule (20) automobile, dans lequel :
- le profilé (2) extrudé présente une nervure (5) longitudinale de solidarisation du profilé (2) extrudé et d'un enjoliveur, dit enjoliveur (6) pied C,
- ledit enjoliveur (6) pied C présentant un repliement (12) latéral formant une gorge (7) de forme en U selon toute section droite transversale dudit enjoliveur (6) pied C,
la nervure (5) longitudinale formant au moins une lèvre (8) souple s'étendant continument sur la longueur de la nervure (5) longitudinale,
la nervure (5) longitudinale étant adaptée pour pouvoir s'étendre dans la gorge (7) dudit enjoliveur (6) pied C,
**caractérisé en ce que** la gorge (7) en U dudit enjoliveur (6) pied C présente une pluralité de protubérances (14) s'étendant chacune dans la gorge (7) en U à partir d'une face (9) interne d'une paroi (15) formant la gorge (7) en U, chaque protubérance (14) étant adaptée pour pouvoir coopérer chacune avec un tronçon (10) de lèvre (8) souple de la nervure (5) longitudinale engagée dans la gorge (7) en U et pour pouvoir retenir le profilé (2) extrudé solidaire dudit enjoliveur (6) pied C sur toute la longueur du profilé (2) extrudé.

2. Système (1) de rétention selon la revendication 1, **caractérisé en ce que** le profilé (2) extrudé est exempt de tout organe de fixation surmoulé par injection sur le profilé (2) extrudé.

3. Système (1) de rétention selon la revendication 1, **caractérisé en ce que** le profilé (2) extrudé est exempt de tout organe de fixation surmoulé par injection à l'une des extrémités longitudinales du profilé (2) extrudé.

4. Système (1) de rétention selon l'une des revendications 1 à 3, **caractérisé en ce que** le profilé (2) extrudé est exempt de tout organe de fixation du profilé (2) extrudé par clipsage, rapporté sur le profilé (2) extrudé ultérieurement à une extrusion du profilé (2) extrudé.

5. Système (1) de rétention selon la revendication 4, **caractérisé en ce que** le profilé (2) extrudé est exempt de tout organe de fixation du profilé (2) extrudé par clipsage, s'étendant à l'une des extrémités longitudinales du profilé (2) extrudé.

6. Système (1) de rétention selon l'une des revendications 1 à 5, **caractérisé en ce que** le profilé (2) extrudé est en au moins un matériau choisi dans le groupe formé des polymères élastomères thermoplastiques (TPE), des caoutchoucs synthétiques, des polymères thermoplastiques vulcanisés (TPV) et des polychlorures de vinyle (PVC).

7. Système (1) de rétention selon l'une des revendications 1 à 6, **caractérisé en ce que** le profilé (2) extrudé est monobloc.

8. Système (1) de rétention selon l'une de des revendications 1 à 7, **caractérisé en ce que** chaque protubérance (14) s'étend à partir de la face (9) interne de la paroi (15) et dans une direction sensiblement orthogonale à ladite face (9) interne.

9. Système (1) de rétention selon l'une des revendications 1 à 8, **caractérisé en ce que** la face (9) interne de la gorge (7) en U dudit enjoliveur (6) pied C présente une pluralité d'évidements (11) traversant la paroi (15), chaque évidemment (11) de la pluralité d'évidements (11) s'étendant radialement entre une protubérance (14) de la pluralité de protubérances et un fond (16) de la gorge (7) en U et de façon à pouvoir recevoir le tronçon (10) de lèvre (8) souple de la nervure (5) latérale engagée dans la gorge (7) en U, le tronçon (10) de lèvre (8) souple étant rappelé élastiquement dans l'évidement (11), et pour pouvoir coopérer avec la protubérance (14) et retenir le profilé (2) extrudé solidaire dudit enjoliveur (6) pied C.

10. Système (1) de rétention selon l'une des revendications 1 à 9 **caractérisé en ce que** la porte (13) arrière est une porte mixte.

11. Enjoliveur, dit enjoliveur (6) pied C, présentant un
repliement (12) formant une gorge (7) s'étendant sur au moins une partie de longueur dudit enjoliveur (6) pied C et de forme en U en section droite transversale dudit enjoliveur (6) pied C,
la gorge (7) dudit enjoliveur (6) pied C étant adaptée pour pouvoir recevoir une nervure (5) longitudinale d'un profilé (2) extrudé d'un système (1) de rétention selon l'une des revendications 1 à 10,
la gorge (7) dudit enjoliveur (6) présentant une pluralité de protubérances (14) alignées selon un axe (17) d'allongement de la gorge (7) en U, chaque protubérance (14) s'étendant à partir d'une face (9) interne d'une paroi (15) formant la gorge (7) en U et étant adaptée pour pouvoir coopérer chacune avec la nervure (5) latérale engagée dans la gorge (7) en U et pour pouvoir retenir le profilé (2) extrudé solidaire de l'enjoliveur (6) sur toute la longueur du profilé (2) extrudé.

12. Véhicule (20) automobile équipé d'un système selon l'une des revendications 1 à 10, de rétention d'un profilé (2) extrudé d'une coulisse (3) de porte arrière (13).

13. Véhicule (20) automobile équipé d'un enjoliveur, dit enjoliveur (6) de pied C, selon la revendication 11.
